# EUROPEAN PATENT SPECIFICATION

(11) **EP 4 358 266 B1**
(45) Date of publication and mention of the grant of the patent: **15.01.2025**
(21) Application number: 23199812.1
(22) Date of filing: 26.09.2023
(51) Int. Cl.: H01M 50/367, H01M 10/613, H01M 10/625, H01M 10/647, H01M 10/6563, H01M 50/209, H01M 50/271

(54) **BATTERY MODULE**
BATTERIEMODUL
MODULE DE BATTERIE

(30) Priority: 20.10.2022 JP 2022168080
(43) Date of publication of application: 24.04.2024
(73) Proprietor: Prime Planet Energy & Solutions, Inc., Chuo-ku Tokyo 103-0022 (JP)
(72) Inventor: YOSHIMURA, Yutaro, Tokyo, 103-0022 (JP); ABE, Kosyo, Tokyo, 103-0022 (JP); TANAKA, Iwao, Tokyo, 103-0022 (JP); OSONO, Katsuya, Tokyo, 103-0022 (JP); TERANAKA, Tomochika, Tokyo, 103-0022 (JP)
(74) Representative: Kuhnen & Wacker Patent- und Rechtsanwaltsbüro PartG mbB

(56) References cited:
- WO-A1-2014/024434
- US-A1- 2009 111 007

## Description

### CROSS REFERENCE TO RELATED APPLICATIONS

This nonprovisional application is based on Japanese Patent Application No. 2022-168080 filed on October 20, 2022 with the Japan Patent Office.

### BACKGROUND OF THE INVENTION

### Field of the Invention

The present invention relates to a battery module.

### Description of the Background Art

For example, WO 2014/024434 discloses a power supply device including: a battery stack formed by stacking a plurality of battery cells with a spacer being interposed therebetween; a gas duct disposed on an upper surface of the battery stack; and a top cover that covers and protects a bus bar and a circuit board connected to the battery stack. The top cover is attached to the gas duct using a set screw.

### SUMMARY OF THE INVENTION

As disclosed in WO 2014/024434, there has been known a battery module including: a plurality of stacked battery cells; and a cover body provided to cover the plurality of battery cells in order to protect a bus bar connected to the battery cells or the like. In such a battery module, a structure for attaching the cover body is required to be constructed in a simple manner in order to prevent an increased number of components of the battery module and a complicated operation of attaching the cover body.

Thus, it is an object of the present invention to solve the above-described problem and to provide a battery module to realize a structure for attaching a cover body with a simple configuration.
[1] A battery module comprising: a plurality of battery cells stacked in a first direction; a cover body provided to cover the plurality of battery cells in a second direction orthogonal to the first direction; and a duct through which gas discharged from each of the plurality of battery cells flows, wherein the duct has a duct main body portion disposed between each of the plurality of battery cells and the cover body in the second direction and extending in the first direction to form a flow space for the gas, a cylindrical portion to which a hose is able to be fitted, the cylindrical portion extending, in the first direction in a form of a cylinder, from one end portion of the duct main body portion in the first direction so as to have a tip with an opening, and a projection with which an end portion of the hose fitted to the cylindrical portion is able to be brought into abutment, the projection protruding from an outer peripheral surface of the cylindrical portion at a position away from the opening of the cylindrical portion in the first direction, and the cover body has an anchoring portion anchored to the projection in the second direction.
   According to the battery module thus configured, the cylindrical portion is provided with the projection for abutment with the hose, and the projection and the anchoring portion of the cover body are anchored to each other, thereby attaching the cover body to the duct. Thus, a structure for attaching the cover body can be realized with a simple configuration.
[2] The battery module according to [1], wherein the cover body further has a flat plate portion disposed in parallel with a plane orthogonal to the second direction, and the anchoring portion has an arm portion extending in the second direction from an peripheral edge portion of the flat plate portion and elastically deformable in a direction away from the outer peripheral surface of the cylindrical portion, and a claw portion protruding from a tip portion of the arm portion in a direction toward the outer peripheral surface of the cylindrical portion.
   According to the battery module thus configured, when attaching the cover body to the duct, the claw portion and the projection can be anchored to each other with the arm portion being elastically deformed in the direction away from the outer peripheral surface of the cylindrical portion.
[3] The battery module according to [1] or [2], further comprising an end plate disposed beside an end portion of the plurality of battery cells in the first direction, wherein the duct further has a duct extension portion extending, in one direction along the first direction, from the other end portion of the duct main body portion in the first direction, and a clip portion extending from the duct extension portion in the other direction along the first direction, the clip portion and the duct extension portion sandwiching the end plate in the second direction.

According to the battery module thus configured, the cylindrical portion and the projection provided at one end portion of the duct main body portion are used to attach the cover body, whereas the duct extension portion and the clip portion provided at the other end of the duct main body portion are used to attach the duct. Thus, respective structures for attaching the cover body and the duct can be each constructed in a simple manner.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a battery module according to an embodiment of the present invention.
Fig. 2 is an exploded assembly diagram showing the battery module in Fig. 1.
Fig. 3 is a perspective view showing an internal structure of the battery module in Fig. 1.
Fig. 4 is another perspective view showing the internal structure of the battery module in Fig. 1.
Fig. 5 is a perspective view showing a battery cell unit included in the battery module in Fig. 1.
Fig. 6 is a perspective view showing the battery cell included in the battery cell unit in Fig. 1.
Fig. 7 is a perspective view showing a duct.
Fig. 8 is another perspective view showing the duct.
Fig. 9 is a side view showing the battery module when viewed in a direction indicated by an arrow IX in Fig. 1.
Fig. 10 is a perspective view showing a step of attaching the cover body to the duct.
Fig. 11 is a cross sectional view showing the battery module (state in which the duct is attached to the attachment-target member) when viewed in a direction of an arrow on a line XI-XI in Fig. 2.
Fig. 12 is a side view showing a first step when attaching the duct to the attachment-target member.
Fig. 13 is a side view showing a second step when attaching the duct to the attachment-target member.
Fig. 14 is a perspective view showing the battery module when viewed in a direction indicated by an arrow XIV in Fig. 3.

### DESCRIPTION OF THE PREFERRED EMBODIMENTS

Embodiments of the present invention will be described with reference to figures. It should be noted that in the figures referred to below, the same or corresponding members are denoted by the same reference characters.

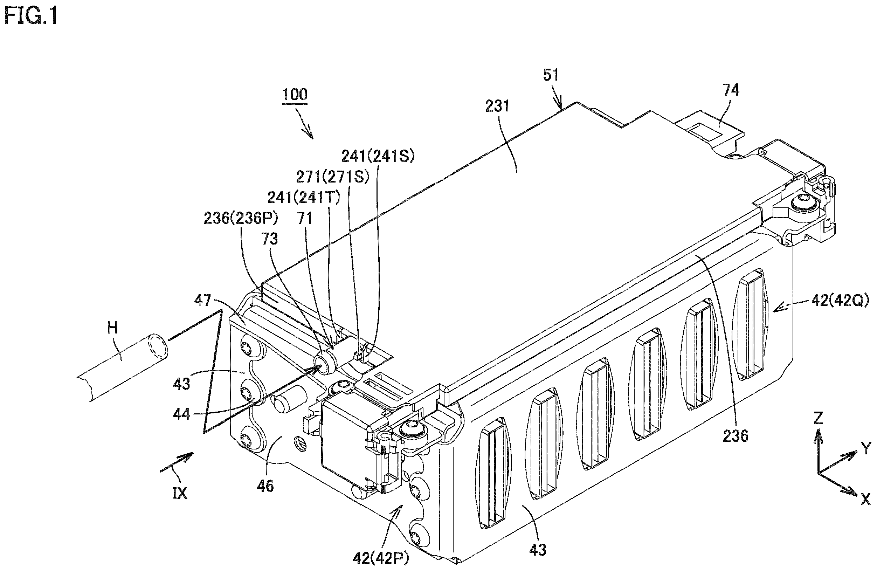

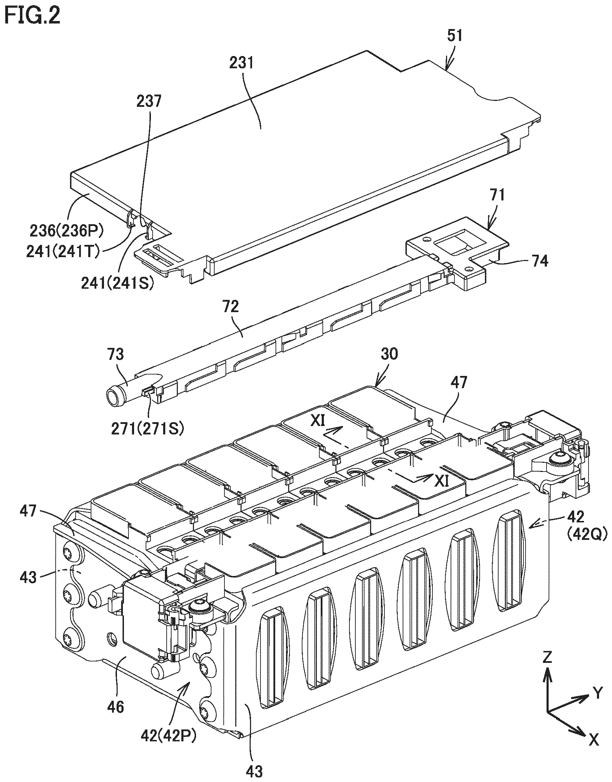

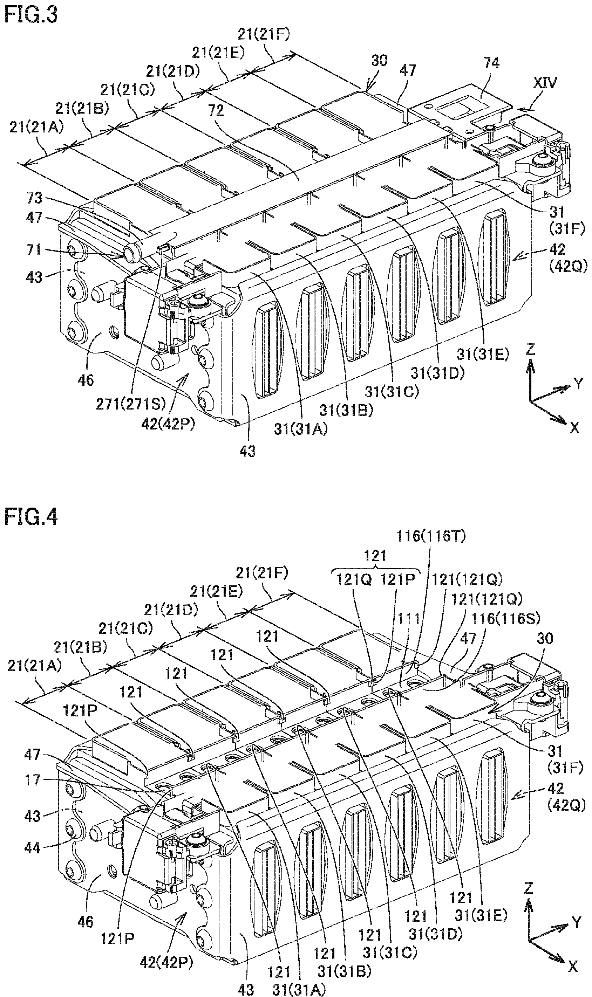

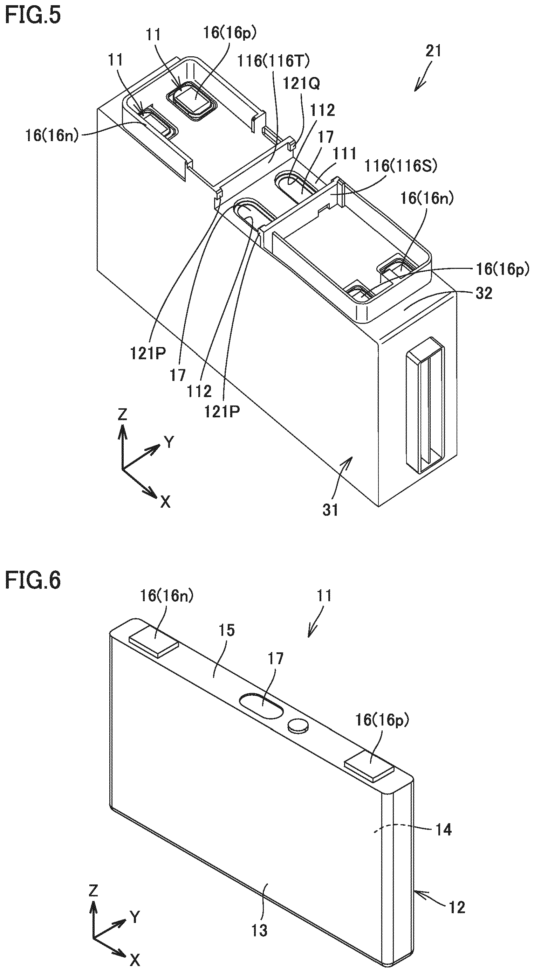

Fig. 1 is a perspective view showing a battery module according to an embodiment of the present invention. Fig. 2 is an exploded assembly diagram showing the battery module in Fig. 1. Each of Figs. 3 and 4 is a perspective view showing an internal structure of the battery module in Fig. 1. Fig. 5 is a perspective view showing a battery cell unit included in the battery module in Fig. 1. Fig. 6 is a perspective view showing a battery cell included in the battery cell unit in Fig. 1.

Referring to Figs. 1 to 6, a battery module 100 is used as a power supply for driving a vehicle such as a hybrid electric vehicle (HEV), a plug-in hybrid electric vehicle (PHEV), or a battery electric vehicle (BEV).

In the present specification, for convenience of description of the structure of battery module 100, the "Y axis" represents an axis extending in parallel with a stacking direction of a plurality of below-described battery cells 11, the "X axis" represents an axis extending in a direction orthogonal to the Y axis, and the "Z axis" represents an axis extending in a direction orthogonal to the Y axis and the X axis. An obliquely rightward upward direction in the plane of sheet of Fig. 1 is "+Y axis direction", and an obliquely leftward downward direction in the plane of sheet of Fig. 1 is "-Y axis direction". An obliquely rightward downward direction in the plane of sheet of Fig. 1 is "+X axis direction" and an obliquely leftward upward direction in the plane of sheet of Fig. 1 is "-X axis direction". An upward direction in the plane of sheet of Fig. 1 is "+Z axis direction" and a downward direction in the plane of sheet of Fig. 1 is "-Z axis direction". Typically, battery module 100 is mounted on a vehicle in such a posture that the +Z axis direction corresponds to the upward direction and the -Z axis direction corresponds to the downward direction.

First, an overall structure of battery module 100 will be described. As shown in Figs. 3 and 4, battery module 100 has a plurality of battery cell units 21 (21A, 21B, 21C, 21D, 21E, 21F).

The plurality of battery cell units 21 are arranged side by side in the Y axis direction. Battery cell unit 21A, battery cell unit 21B, battery cell unit 21C, battery cell unit 21D, battery cell unit 21E, and battery cell unit 21F are arranged side by side in this order from the negative side to the positive side in the Y axis direction. It should be noted that the number of battery cell units 21 included in battery module 100 is not particularly limited as long as two or more battery cell units 21 are included.

As shown in Figs. 5 and 6, each of battery cell units 21, i.e., each of battery cell units 21A to 21F includes a plurality of battery cells 11 and a case body 31.

In each battery cell unit 21, two battery cells 11 are arranged side by side continuously in the Y axis direction. The number of battery cells 11 included in each battery cell unit 21 is not particularly limited as long as a plurality of battery cells 11 are included.

Each of battery cells 11 is a lithium ion battery. Battery cell 11 has an output density of 8000 W/L or more. Battery cell 11 has a prismatic shape and has a thin plate shape in the form of a rectangular parallelepiped. The plurality of battery cells 11 are stacked such that the Y axis direction corresponds to the thickness direction of each battery cell 11.

Each of battery cells 11 has an exterior package 12. Exterior package 12 is constituted of a housing having a rectangular parallelepiped shape, and forms the external appearance of battery cell 11. An electrode assembly and an electrolyte solution are accommodated in exterior package 12.

Exterior package 12 has a cell side surface 13, a cell side surface 14, and a cell top surface 15. Each of cell side surface 13 and cell side surface 14 is constituted of a flat surface orthogonal to the Y axis direction. Cell side surface 13 and cell side surface 14 are oriented oppositely in the Y axis direction. Each of cell side surface 13 and cell side surface 14 has the largest area among the areas of the plurality of side surfaces of exterior package 12. Cell top surface 15 is constituted of a flat surface orthogonal to the Z axis direction. Cell top surface 15 is oriented in the +Z axis direction.

Battery cell 11 further has a gas-discharge valve 17. Gas-discharge valve 17 is provided in cell top surface 15. Gas-discharge valve 17 is provided at the center portion of cell top surface 15 in the X axis direction. When internal pressure of exterior package 12 becomes more than or equal to a predetermined value due to gas generated inside exterior package 12, gas-discharge valve 17 discharges the gas to the outside of exterior package 12. The gas from gas-discharge valve 17 flows through a below-described duct 71 and is discharged to the outside of battery module 100.

Battery cell 11 further has electrode terminals 16 that are a pair of a positive electrode terminal 16p and a negative electrode terminal 16n. Electrode terminals 16 are provided on cell top surface 15. Positive electrode terminal 16p and negative electrode terminal 16n are provided on both sides with gas-discharge valve 17 being interposed therebetween in the X axis direction.

Case body 31 has a rectangular parallelepiped appearance. Case body 31 is composed of a resin. In each battery cell unit 21, case body 31 accommodates a plurality of battery cells 11. Case body 31 has a case top portion 32. Case top portion 32 has a wall shape having a thickness direction corresponding to the Z axis direction with case top portion 32 being disposed in parallel with the X-Y axes plane.

As shown in Figs. 3 and 4, the plurality of battery cells 11 are stacked in the Y axis direction across battery cell units 21A to 21F arranged side by side in the Y axis direction. The plurality of battery cells 11 are stacked such that cell side surfaces 13 of battery cells 11 adjacent to each other in the Y axis direction face each other and cell side surfaces 14 of battery cells 11 adjacent to each other in the Y axis direction face each other. Thus, positive electrode terminals 16p and negative electrode terminals 16n are alternately arranged in the Y axis direction in which the plurality of battery cells 11 are stacked. Positive electrode terminal 16p and negative electrode terminal 16n adjacent to each other in the Y axis direction are connected to each other by a bus bar (not shown) disposed in case top portion 32. Thus, the plurality of battery cells 11 are electrically connected together in series.

As shown in Figs. 1 to 4, battery module 100 further has a pair of end plates 42 (42P, 42Q) and a pair of binding bars 43. The pair of binding bars 43 and the pair of end plates 42 collectively hold the plurality of battery cell units 21 (the plurality of battery cells 11) arranged side by side in the Y axis direction.

The pair of end plates 42 are disposed at both ends beside the plurality of battery cells 11 (the plurality of battery cell units 21) in the Y axis direction. End plate 42P faces battery cell unit 21A in the Y axis direction, and end plate 42Q faces battery cell unit 21F in the Y axis direction.

Each of end plates 42 has a plate portion 46 and a roof portion 47. Plate portion 46 has a plate shape having a thickness direction corresponding to the Y axis direction. Roof portion 47 extends, from an end portion (upper end portion) of plate portion 46 in the +Z axis direction, in a direction away from the stack of battery cells 11 in the Y axis direction. Roof portion 47 has a roof shape having a thickness in the Z axis direction and extending in the form of a strip along the upper end portion of plate portion 46.

The pair of binding bars 43 are disposed at both ends of the stack of battery cells 11 in the X axis direction. Each of binding bars 43 extends in the Y axis direction. An end portion of binding bar 43 in the -Y axis direction is connected to end plate 42P. An end portion of binding bar 43 in the +Y axis direction is connected to end plate 42Q. The pair of binding bars 43 and the pair of end plates 42 apply a restraint force in the Y axis direction onto the plurality of battery cells 11 (the plurality of battery cell units 21).

Battery module 100 further has duct 71 and a cover body 51. Duct 71 is composed of a resin. Duct 71 extends in the Y axis direction with duct 71 facing the plurality of battery cells 11 (the plurality of battery cell units 21) in the Z axis direction. Duct 71 forms a path through which gas discharged from each of the plurality of battery cells 11 flows. Duct 71 is attached to an attachment-target member 30. Attachment-target member 30 is a member held by battery cells 11, and, in the present embodiment, is constituted of the plurality of case bodies 31 arranged side by side in the Y axis direction. The duct according to the present invention is not limited to the above, and may be attached to a separator interposed between the battery cells stacked in the Y axis direction.

Cover body 51 is composed of a resin. Cover body 51 is provided to cover the plurality of battery cells 11 in the Z axis direction. Cover body 51 is provided to face case top portions 32 of case bodies 31 in the Z axis direction. Cover body 51 is provided to further cover duct 71.

Cover body 51 is detachably attached to duct 71. Hereinafter, a structure for attaching cover body 51 to duct 71 will be described.

Referring to Figs. 1 and 2, cover body 51 has a flat plate portion 231 and an edge portion 236. Flat plate portion 231 has a thickness in the Z axis direction and is disposed in parallel with the X-Y axes plane orthogonal to the Z axis direction. Flat plate portion 231 has a quadrangular shape as a whole when viewed in a plan view. Flat plate portion 231 is provided to face the plurality of battery cells 11 (the plurality of battery cell units 21) in the Z axis direction. Edge portion 236 extends in the -Z axis direction from a peripheral edge portion of flat plate portion 231. Edge portion 236 has a height in the Z axis direction and intermittently extends along the peripheral edge portion of flat plate portion 231.

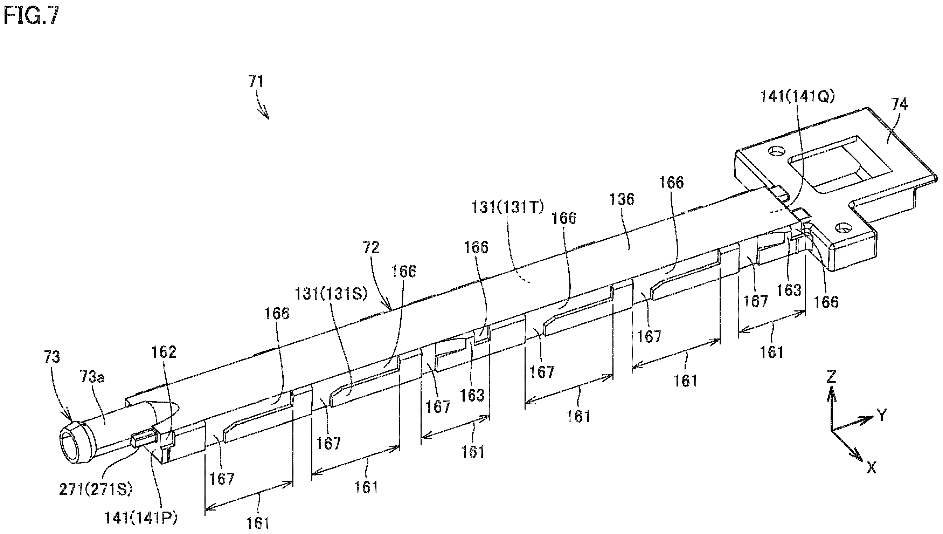

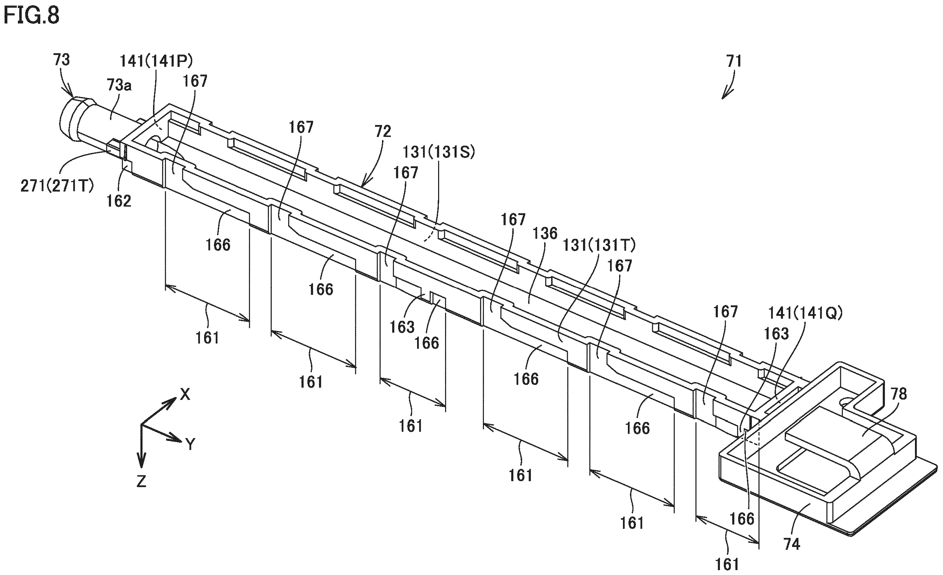

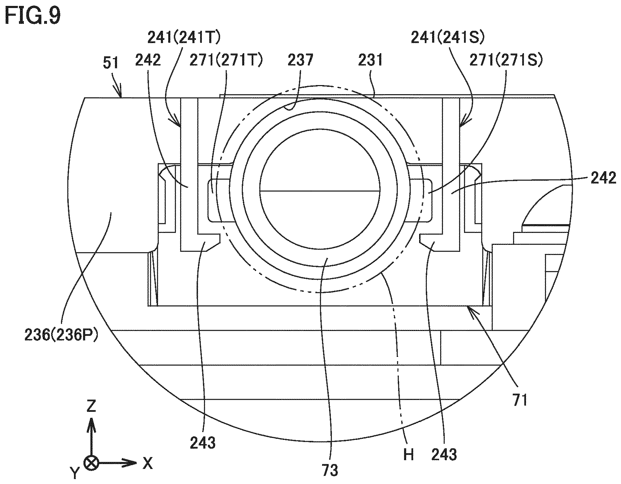

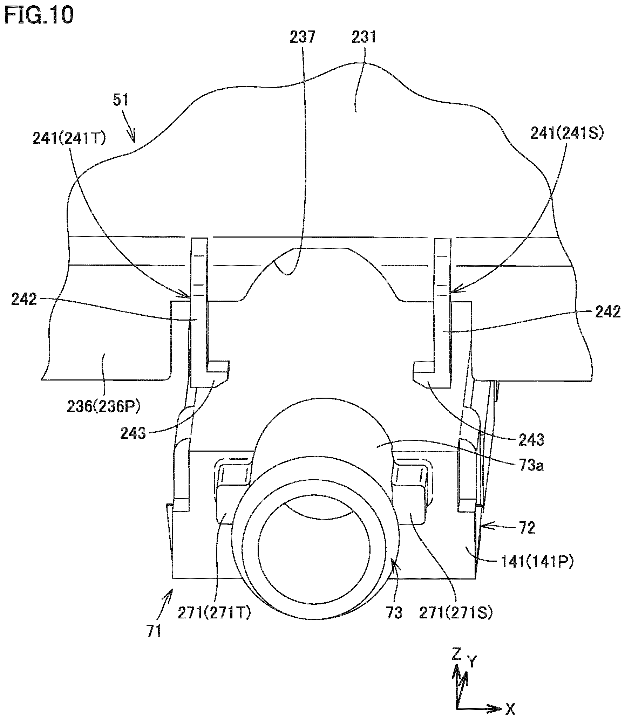

Each of Figs. 7 and 8 is a perspective view showing the duct. Fig. 9 is a side view showing the battery module when viewed in a direction indicated by an arrow IX in Fig. 1. Fig. 10 is a perspective view showing a step of attaching the cover body to the duct.

Referring to Figs. 7 and 8, duct 71 has a duct main body portion 72 and a duct extension portion 74. Duct main body portion 72 forms a main part of duct 71 for allowing gas from each battery cell 11 to flow therethrough. Duct main body portion 72 extends in the Y axis direction with duct main body portion 72 facing, in the Z axis direction, the plurality of gas-discharge valves 17 arranged side by side with a space being interposed therebetween in the Y axis direction. Duct extension portion 74 extends in the +Y axis direction from the end portion of duct main body portion 72 in the +Y axis direction. Duct extension portion 74 has a shape of plate disposed in parallel with the X-Y axes plane.

Referring to Figs. 1 and 2 as well as Figs. 7 to 10, duct 71 further has a cylindrical portion 73 and a pair of projections 271 (271S, 27 1T).

Cylindrical portion 73 extends, in the -Y axis direction in the form of a cylinder, from the end portion of duct main body portion 72 in the -Y axis direction so as to have a tip with an opening. Duct main body portion 72 is provided between duct extension portion 74 and cylindrical portion 73 in the Y axis direction. Cylindrical portion 73 communicates with a flow space 110, which will be described later. As shown in Fig. 1, a hose H for discharging gas from each of battery cells 11 is fitted to cylindrical portion 73.

Each of projections 271 is provided at a position away from the opening of cylindrical portion 73 in the +Y axis direction. Projection 271 protrudes from outer peripheral surface 73a of cylindrical portion 73. Projection 271 has a thickness in the Z axis direction and extends in the Y axis direction in the form of a rib. An end portion of projection 271 in the +Y axis direction is connected to duct main body portion 72 (a duct side wall portion 141P described later). The pair of projections 271 are symmetrically provided with respect to the Y-Z axes plane including the central axis of cylindrical portion 73. Projection 271S is provided at a position away from projection 271T in the +X axis direction. Each of projections 271 is provided such that an end portion of hose H fitted to cylindrical portion 73 can be brought into abutment therewith.

As shown in Figs. 9 and 10, a notch portion 237 is provided in an edge portion 236P of edge portions 236 of cover body 51, edge portion 236P being along the peripheral edge portion of the end portion of flat plate portion 231 in the -Y axis direction. In a state in which cover body 51 is attached to duct 71, cylindrical portion 73 and the pair of projections 271 are disposed in notch portion 237.

Cover body 51 further has a pair of anchoring portions 241 (241S, 241T). The pair of anchoring portions 241 can be respectively anchored to the pair of projections 271 in the Z axis direction.

Each of anchoring portions 241 has an arm portion 242 and a claw portion 243. Arm portion 242 extends in the -Z axis direction from the peripheral edge portion of flat plate portion 231. When viewed in the Y axis direction, arm portion 242 is provided to partially overlap with a portion of edge portion 236 notched by notch portion 237. An end portion of arm portion 242 in the +Z axis direction forms a fixed end supported by flat plate portion 231, and an end portion of arm portion 242 in the -Z axis direction forms a free end. Arm portion 242 is elastically deformable with respect to the fixed end thereof in a direction away from outer peripheral surface 73a of cylindrical portion 73. Claw portion 243 protrudes, in a direction toward outer peripheral surface 73a of cylindrical portion 73, from the tip portion of arm portion 242 in the -Z axis direction.

When attaching cover body 51 to duct 71, cover body 51 is disposed just above duct 71 and is slid toward duct 71 in the -Z axis direction. On this occasion, claw portions 243 of the pair of anchoring portions 241 are respectively brought into abutment with the pair of projections 271 in the Z axis direction, with the result that arm portions 242 are each elastically deformed in the direction away from outer peripheral surface 73a of cylindrical portion 73. When cover body 51 is further slid in the -Z axis direction, claw portions 243 climb over projections 271. Arm portions 242 are each restored in the direction toward outer peripheral surface 73a of cylindrical portion 73, with the result that claw portions 243 are anchored to projections 271 in the Z axis direction.

In the present embodiment, the pair of projections 271 on the duct 71 side and the pair of anchoring portions 241 on the cover body 51 side are respectively anchored to each other, with the result that cover body 51 is attached to duct 71. According to such a configuration, since projections 271, which are included in duct 71 for the purpose of abutment with the hose in the first place, are used, the structure for attaching cover body 51 can be constructed in a simple manner.

Next, a structure for attaching duct 71 to attachment-target member 30 (the plurality of case bodies 31) will be described.

Referring to Figs. 4 and 5, attachment-target member 30 (the plurality of case bodies 31) has a floor wall portion 111 and a pair of vertical wall portions 116 (116S, 116T).

Floor wall portion 111 is constituted of a portion of case top portion 32 of each case body 31. Floor wall portion 111 is disposed in parallel with the X-Y axes plane. Floor wall portion 111 has a wall shape having a thickness in the Z axis direction and extending in the Y axis direction across the plurality of case bodies 31 arranged side by side in the Y axis direction. Floor wall portion 111 is disposed just above each of cell top surfaces 15 of battery cells 11 accommodated in case bodies 31. Floor wall portion 111 is disposed between positive electrode terminals 16p and negative electrode terminals 16n in the X axis direction. Floor wall portion 111 is provided with through holes 112 to expose gas-discharge valves 17.

The pair of vertical wall portions 116 rise from floor wall portion 111 in the +Z axis direction. An end portion (lower end portion) of each vertical wall portion 116 in the -Z axis direction is connected to floor wall portion 111. Vertical wall portion 116 has a wall shape having a thickness in the X axis direction and extending in the Y axis direction with an unchanged height in the Z axis direction across the plurality of case bodies 31 arranged side by side in the Y axis direction.

The pair of vertical wall portions 116 are provided with a space being interposed therebetween in the X axis direction. Vertical wall portion 116S is provided at a position away from vertical wall portion 116T in the +X axis direction. The pair of vertical wall portions 116 are provided at the center portions of case top portions 32 in the X axis direction. Through holes 112 are opened between vertical wall portion 116S and vertical wall portion 116T in the X axis direction. In a state in which duct 71 is not attached to attachment-target member 30, a space surrounded in three directions by floor wall portion 111, vertical wall portion 116S, and vertical wall portion 116T is opened in the +Z axis direction and the ±Y axis direction.

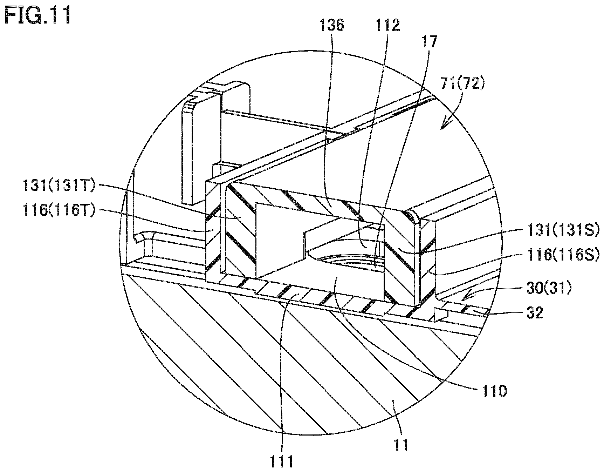

Fig. 11 is a cross sectional view showing the battery module (state in which the duct is attached to the attachment-target member) when viewed in a direction of an arrow on a line XI-XI in Fig. 2.

Referring to Figs. 7, 8 and 11, duct main body portion 72 is disposed between the pair of vertical wall portions 116. Duct main body portion 72 and case bodies 31 form flow space 110 for gas discharged from each battery cell 11.

Duct main body portion 72 has a duct top wall portion 136, a pair of duct side wall portions 131 (131S, 131T), and a pair of duct side wall portions 141 (141P, 141Q).

Duct top wall portion 136 is disposed in parallel with the X-Y axes plane. Duct top wall portion 136 has a wall shape having a thickness in the Z axis direction and extending in the Y axis direction with an unchanged width in the X axis direction. Duct top wall portion 136 faces floor wall portion 111 with flow space 110 being interposed therebetween in the Z axis direction. Flow space 110 is formed between duct top wall portion 136 and floor wall portion 111 in the Z axis direction.

The pair of duct side wall portions 131 extend, in the Z axis direction toward floor wall portion 111 (in the -Z axis direction), from both end portions of duct top wall portion 136 in the X axis direction. Each of duct side wall portions 131 has a wall shape having a thickness in the X axis direction and extending in the Y axis direction with an unchanged height in the Z axis direction. The pair of duct side wall portions 131 are provided with a space being interposed therebetween in the X axis direction. Duct side wall portion 131S is provided at a position away from duct side wall portion 131T in the +X axis direction. Flow space 110 is formed between duct side wall portion 131S and duct side wall portion 131T in the X axis direction.

Duct side wall portion 131S faces vertical wall portion 116S in the X axis direction. Duct side wall portion 131T faces vertical wall portion 116T in the X axis direction. A space is provided between duct side wall portion 131S and vertical wall portion 116S in the X axis direction. A space is provided between duct side wall portion 131T and vertical wall portion 116T in the X axis direction. The size of each of these spaces may be such a size that leakage of a small amount of gas from flow space 110 is permitted.

Each of duct side wall portions 141 is disposed in parallel with the X-Z axes plane. The pair of duct side wall portions 141 are provided with a space being interposed therebetween in the Y axis direction. The pair of duct side wall portions 141 are connected to both end portions of duct top wall portion 136 and both end portions of each of the pair of duct side wall portions 131 in the Y axis direction.

Duct side wall portion 141P is provided at a position away from duct side wall portion 141Q in the -Y axis direction. Flow space 110 is formed between duct side wall portion 141P and duct side wall portion 141Q in the Y axis direction. Duct side wall portion 141 has a wall shape having a thickness in the Y axis direction and extending in the X axis direction with an unchanged height in the Z axis direction.

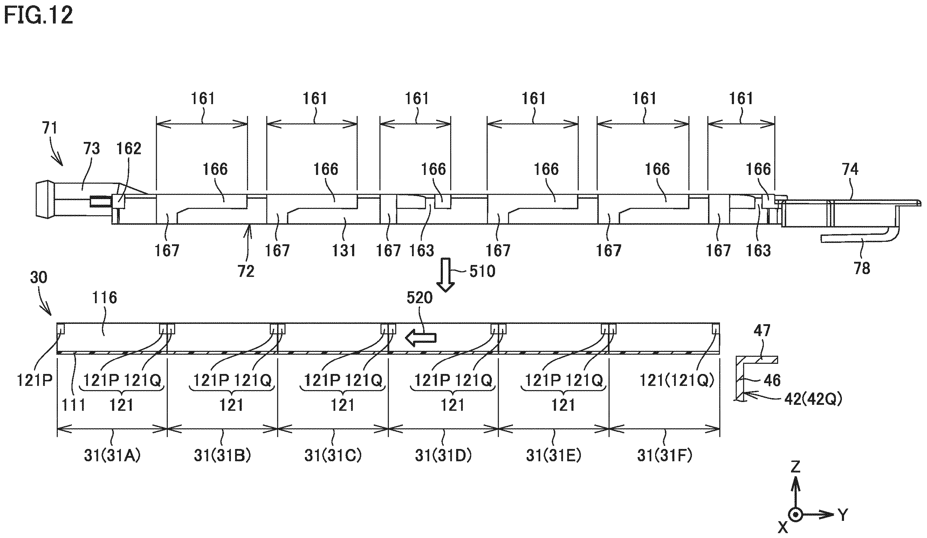

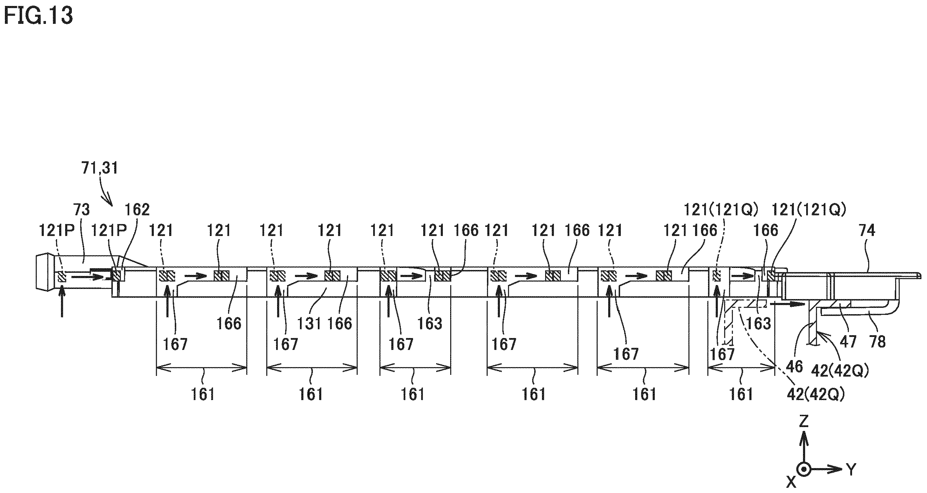

Each of Figs. 12 and 13 is a side view showing a step when attaching the duct to the attachment-target member. Referring to Figs. 4, 5, and 12, each vertical wall portion 116 of attachment-target member 30 (the plurality of case bodies 31) has claw portions 121. Each of claw portions 121 has a protruding shape protruding in the X axis direction.

Claw portions 121 are provided in each of vertical wall portions 116, i.e., vertical wall portion 116S and vertical wall portion 116T. Each of claw portions 121 is provided in vertical wall portion 116S to protrude toward duct side wall portion 131S from the inner surface of vertical wall portion 116S facing duct side wall portion 131S in the X axis direction. Each of claw portions 121 is provided in vertical wall portion 116T to protrude toward duct side wall portion 131T from the inner surface of vertical wall portion 116T facing duct side wall portion 131T in the X axis direction.

Claw portions 121 are provided at the upper end portion of each vertical wall portion 116. The plurality of claw portions 121 are provided in each vertical wall portion 116 with a space being interposed therebetween in the Y axis direction. The plurality of claw portions 121 are provided such that claw portions 121 of vertical wall portion 116S and claw portions 121 of vertical wall portion 116T face each other in the X axis direction.

As shown in Fig. 5, in each case body 31 of attachment-target member 30, vertical wall portion 116 is provided with a first protrusion 121P and a second protrusion 121Q. First protrusion 121P and second protrusion 121Q are provided at both end portions of case body 31 in the Y axis direction. Each of first protrusion 121P and second protrusion 121Q has a protruding shape protruding in the X axis direction.

As shown in Figs. 4 and 12, when the plurality of case bodies 31 are arranged side by side in the Y axis direction, respective first protrusions 121P and second protrusions 121Q of adjacent case bodies 31 in the Y axis direction are connected together in the Y axis direction, thereby forming claw portions 121.

In Figs. 4 and 12, respective case bodies 31 of battery cell unit 21A, battery cell unit 21B, battery cell unit 21C, battery cell unit 21D, battery cell unit 21E, and battery cell unit 21F are shown as a case body 31A, a case body 31B, a case body 31C, a case body 31D, a case body 31E, and a case body 31F, respectively. For example, first protrusion 121P provided in case body 31C and second protrusion 121Q provided in case body 31D adjacent to case body 31C are connected to each other in the Y axis direction to form a claw portion 121.

On the other hand, at the end portion of vertical wall portion 116 in the -Y axis direction, first protrusion 121P provided in case body 31A is disposed solely. At the end portion of vertical wall portion 116 in the +Y axis direction, second protrusion 121Q provided in case body 31F is disposed solely to form a claw portion 121.

Referring to Figs. 7, 8, and 12, groove portions 161 are provided in each duct side wall portion 131 of duct 71. Each of groove portions 161 has a recessed shape recessed in the X axis direction.

Groove portions 161 are provided in each of duct side wall portions 131, i.e., duct side wall portion 131S and duct side wall portion 131T. Duct side wall portion 131S is provided with groove portions 161 each recessed from the outer surface of duct side wall portion 131S facing vertical wall portion 116S in the X axis direction so as to be separated away from vertical wall portion 116S. Duct side wall portion 131T is provided with groove portions 161 each recessed from the outer surface of duct side wall portion 131T facing vertical wall portion 116T in the X axis direction so as to be separated away from vertical wall portion 116T.

The plurality of groove portions 161 are formed in each duct side wall portion 131 with a space being interposed therebetween in the Y axis direction. The plurality of groove portions 161 are provided such that groove portions 161 of duct side wall portion 131S and groove portions 161 of duct side wall portion 131T face each other in the X axis direction. The plurality of groove portions 161 are provided to respectively correspond to the plurality of claw portions 121 provided in vertical wall portion 116. With such a configuration, respective sets of claw portions 121 and groove portions 161 are provided at a plurality of positions with a space being interposed therebetween in the Y axis direction.

Each of duct side wall portions 131 (131S, 131T) is further provided with a groove portion 162. Groove portion 162 is provided at the end portion of duct side wall portion 131 in the -Y axis direction. The recessed shape of groove portion 162 is opened in the +Z axis direction and the -Y axis direction.

Each of groove portions 161 has a first segment portion 166 and a second segment portion 167. First segment portion 166 extends in the Y axis direction. In a state in which duct 71 is attached to attachment-target member 30 (the plurality of case bodies 31), claw portion 121 is disposed in first segment portion 166. First segment portion 166 anchors claw portion 121 in the Z axis direction.

First segment portion 166 extends in the Y axis direction along the end portion (upper end portion) of duct side wall portion 131 in the +Z axis direction. First segment portion 166 has a recessed shape forming a step in the X axis direction with respect to the outer surface of duct side wall portion 131 at its end portion in the -Z axis direction and extending in the Y axis direction as its longitudinal direction.

Second segment portion 167 extends in a direction intersecting the Y axis direction and is connected to first segment portion 166. Second segment portion 167 extends in the Z axis direction orthogonal to the Y axis direction. Second segment portion 167 has a recessed shape forming steps with respect to the outer surface of duct side wall portion 131 at its both end portions in the Y axis direction and extending in the Z axis direction as its longitudinal direction. The end portion (upper end portion) of second segment portion 167 in the +Z axis direction and the end portion of first segment portion 166 in the -Y axis direction are connected to each other. First segment portion 166 extends in the +Y axis direction from a position at which first segment portion 166 and second segment portion 167 are connected to each other. Second segment portion 167 allows claw portion 121 to enter first segment portion 166 when attaching duct 71 to attachment-target member 30.

The length of first segment portion 166 in the Y axis direction is preferably 1/2 or less, more preferably 1/4 or less, and further preferably 1/6 or less of the total length of duct side wall portion 131 in the Y axis direction.

Duct side wall portion 131 has a stepped portion 163. Stepped portion 163 is provided in at least one groove portion 161 of the plurality of groove portions 161.

Stepped portion 163 is provided on a path of first segment portion 166. Stepped portion 163 is provided between the end portion of first segment portion 166 in the +Y axis direction and the end portion of first segment portion 166 in the -Y axis direction. Stepped portion 163 has a stepped shape rising from the bottom surface of groove portion 161. More specifically, based on the bottom surface of groove portion 161 as a reference, stepped portion 163 is constituted of: a top surface having the same height as the outer surface of duct side wall portion 131 in the X axis direction; an inclined surface extending obliquely with respect to the Y-X axes plane between the end portion of the top surface in the -Y axis direction and the bottom surface of groove portion 161; and a right-angled surface extending in parallel with the X-Z axes plane between the end portion of the top surface in the +Y axis direction and the bottom surface of groove portion 161.

In a state in which duct 71 is attached to attachment-target member 30, claw portion 121 is disposed opposite to second segment portion 167 with stepped portion 163 being interposed therebetween on the path of first segment portion 166. Claw portion 121 is disposed between the end portion of first segment portion 166 in the +Y axis direction and stepped portion 163.

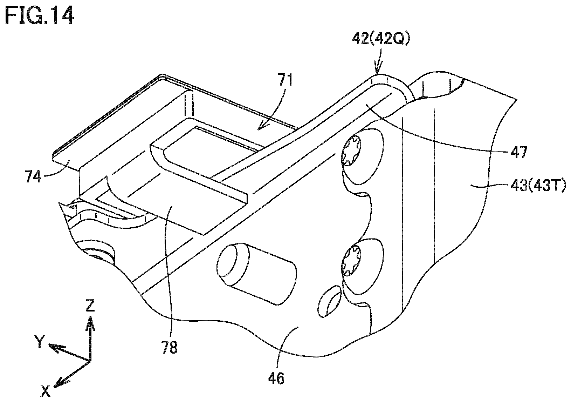

Fig. 14 is a perspective view showing the battery module when viewed in a direction indicated by an arrow XIV in Fig. 3. Referring to Figs. 7, 8, and 14, duct 71 further has a clip portion 78.

Clip portion 78 extends in the -Y axis direction from duct extension portion 74. Clip portion 78 has a bar shape having a thickness in the Z axis direction and extending in the Y axis direction with an unchanged width in the X axis direction. An end portion of clip portion 78 in the +Y axis direction is connected to duct extension portion 74. Clip portion 78 is elastically deformable such that the end portion of clip portion 78 in the -Y axis direction is displaced along the Z axis direction with respect to a position connected to duct extension portion 74.

As shown in Fig. 14, in a state in which duct 71 is attached to attachment-target member 30, clip portion 78 and duct extension portion 74 sandwich end plate 42Q in the Z axis direction. Roof portion 47 of end plate 42Q is sandwiched between duct extension portion 74 and clip portion 78 in the Z axis direction.

Referring to Figs. 12 and 13, when attaching duct 71 to attachment-target member 30, duct 71 is first disposed to face attachment-target member 30 such that the plurality of claw portions 121 respectively face second segment portions 167 of the plurality of groove portions 161 in the Z axis direction.

Next, duct 71 is slid in the -Z axis direction indicated by an arrow 510 in Fig. 12 and is accordingly disposed between the pair of vertical wall portions 116 (116S, 116T). On this occasion, each of the plurality of claw portions 121 enters a corresponding one of the plurality of second segment portions 167, and is moved through second segment portion 167 to the position at which first segment portion 166 and second segment portion 167 are connected to each other (position at which claw portion 121 is indicated by a chain double-dashed line in Fig. 13). Further, first protrusion 121P provided in case body 31A is positioned to face groove portion 162 in the Y axis direction, and roof portion 47 of end plate 42Q is positioned to face a space between clip portion 78 and duct extension portion 74 in the Y axis direction.

Next, duct 71 is slid in the -Y axis direction indicated by an arrow 520 in Fig. 12. On this occasion, each of the plurality of claw portions 121 is moved through first segment portion 166 to a position away in the +Y axis direction from the position at which first segment portion 166 and second segment portion 167 are connected to each other. Further, in groove portion 161 provided with stepped portion 163, claw portion 121 climbs over stepped portion 163 during the movement in first segment portion 166. Claw portion 121 disposed in first segment portion 166 is brought into abutment with the stepped portion in the X axis direction as formed by first segment portion 166 and the outer surface of duct side wall portion 131, and is accordingly anchored in the Z axis direction.

First protrusion 121P provided in case body 31A is disposed in groove portion 162. First protrusion 121P disposed in groove portion 162 is brought into abutment with the stepped portion in the X axis direction as formed by groove portion 162 and the outer surface of duct side wall portion 131, and is accordingly anchored in the Z axis direction. Roof portion 47 of end plate 42Q is inserted between clip portion 78 and duct extension portion 74.

With the above steps, the operation of attaching duct 71 to attachment-target member 30 is completed. It should be noted that when detaching duct 71 from attachment-target member 30, the above steps may be performed in the reverse order.

In the present embodiment, cylindrical portion 73 and the pair of projections 271 provided at the end portion of duct main body portion 72 in the -Y axis direction are used to attach cover body 51, and duct extension portion 74 and clip portion 78 provided at the end portion of duct main body portion 72 in the +Y axis direction are used to attach duct 71. Thus, the respective structures for attaching cover body 51 and duct 71 can be constructed in a simple manner.

The above-described structure of battery module 100 according to the embodiment of the present invention is summarized as follows. Battery module 100 according to the present embodiment includes: the plurality of battery cells 11 stacked in the Y axis direction (first direction); cover body 51 provided to cover the plurality of battery cells 11 in the Z axis direction (second direction) orthogonal to the Y axis direction; and duct 71 through which the gas discharged from each of the plurality of battery cells 11 flows. Duct 71 has: duct main body portion 72 disposed between each of the plurality of battery cells 11 and cover body 51 in the Z axis direction and extending in the Y axis direction to form flow space 110 for the gas; cylindrical portion 73 to which hose H is able to be fitted, cylindrical portion 73 extending, in the Y axis direction in a form of a cylinder, from one end portion of duct main body portion 72 in the Y axis direction so as to have a tip with an opening; and projection 271 with which the end portion of hose H fitted to cylindrical portion 73 is able to be brought into abutment, projection 271 protruding from outer peripheral surface 73a of cylindrical portion 73 at a position away from the opening of cylindrical portion 73 in the Y direction. Cover body 51 has anchoring portion 241 anchored to projection 271 in the Z axis direction.

According to battery module 100 of the embodiment of the present invention thus configured, the structure for attaching cover body 51 to duct 71 can be constructed in a simple manner.

Although the embodiments of the present invention have been described and illustrated in detail, it is clearly understood that the same is by way of illustration and example only and is not to be taken by way of limitation. The scope of the present invention is defined by the terms of the claims.

## Claims

1. A battery module comprising:
a plurality of battery cells (11) stacked in a first direction;
a cover body (51) provided to cover the plurality of battery cells (11) in a second direction orthogonal to the first direction; and
a duct (71) through which gas discharged from each of the plurality of battery cells (11) flows, wherein
the duct (71) has
a duct main body portion (72) disposed between each of the plurality of battery cells (11) and the cover body (51) in the second direction and extending in the first direction to form a flow space (110) for the gas,
a cylindrical portion (73) to which a hose is able to be fitted, the cylindrical portion (73) extending, in the first direction in a form of a cylinder, from one end portion of the duct main body portion (72) in the first direction so as to have a tip with an opening, **characterized in**
a projection (271) with which an end portion of the hose fitted to the cylindrical portion (73) is able to be brought into abutment, the projection (271) protruding from an outer peripheral surface (73a) of the cylindrical portion (73) at a position away from the opening of the cylindrical portion (73) in the first direction, and
the cover body (51) has an anchoring portion (241) anchored to the projection (271) in the second direction.

2. The battery module according to claim 1, wherein
the cover body (51) further has a flat plate portion (231) disposed in parallel with a plane orthogonal to the second direction, and
the anchoring portion (241) has
an arm portion (242) extending in the second direction from an peripheral edge portion of the flat plate portion (231) and elastically deformable in a direction away from the outer peripheral surface (73a) of the cylindrical portion (73), and
a claw portion (243) protruding from a tip portion of the arm portion (242) in a direction toward the outer peripheral surface (73a) of the cylindrical portion (73).

3. The battery module according to claim 1 or 2, further comprising an end plate (42Q) disposed beside an end portion of the plurality of battery cells (11) in the first direction, wherein
the duct (71) further has
a duct extension portion (74) extending, in one direction along the first direction, from the other end portion of the duct main body portion (72) in the first direction, and
a clip portion (78) extending from the duct extension portion (74) in the other direction along the first direction, the clip portion (78) and the duct extension portion (74) sandwiching the end plate (42Q) in the second direction.

## Patentansprüche

1. Batteriemodul, aufweisend:
eine Mehrzahl an Batteriezellen (11), die in einer ersten Richtung gestapelt sind;
einen Abdeckungskörper (51), der vorhanden ist, um die Mehrzahl an Batteriezellen (11) in einer zweiten Richtung abzudecken, die zu der ersten Richtung rechtwinklig ist; und
einen Kanal (71), durch den von jeder aus der Mehrzahl an Batteriezellen (11) ausgestoßenes Gas strömt, wobei der Kanal (71) aufweist:
einen Kanalhauptkörperabschnitt (72), der sich zwischen jeder von der Mehrzahl an Batteriezellen (11) und dem Abdeckungskörper (51) in der zweiten Richtung befindet und in der ersten Richtung verläuft, um einen Strömungsraum (110) für das Gas zu bilden,
einen zylindrischen Abschnitt (73), an dem ein Schlauch angebracht werden kann, wobei der zylindrische Abschnitt (73) in der ersten Richtung in einer Form eines Zylinders von einem Endabschnitt des Kanalhauptkörperabschnitts (72) in der ersten Richtung verläuft, so dass er eine Spitze mit einer Öffnung aufweist,
**gekennzeichnet durch**
einen Vorsprung (271), an dem ein Endabschnitt des an dem zylindrischen Abschnitt (73) angebrachten Schlauchs anliegen kann, wobei der Vorsprung (271) von einer äußeren peripheren Oberfläche (73a) des zylindrischen Abschnitts (73) an einer Position entfernt von der Öffnung des zylindrischen Abschnitts (73) in der ersten Richtung hervorsteht, und
wobei der Abdeckungskörper (51) einen Verankerungsabschnitt (241) aufweist, der in der zweiten Richtung an dem Vorsprung (271) verankert ist.

2. Batteriemodul nach Anspruch 1, wobei
der Abdeckungskörper (51) ferner einen flachen Plattenabschnitt (231) aufweist, der sich parallel zu einer Ebene befindet, die zu der zweiten Richtung rechtwinklig ist, und
der Verankerungsabschnitt (241) aufweist:
einen Armabschnitt (242), der von einem peripheren Kantenabschnitt des flachen Plattenabschnitts (231) aus in der zweiten Richtung verläuft und in einer Richtung weg von der äußeren peripheren Oberfläche (73a) des zylindrischen Abschnitts (72) elastisch verformbar ist, und
einen Klauenabschnitt (243), der von einem Spitzenabschnitt des Armabschnitts (242) aus in einer Richtung zu der äußeren peripheren Oberfläche (73a) des zylindrischen Abschnitts (73) hervorsteht.

3. Batteriemodul nach Anspruch 1 oder 2, ferner aufweisend eine Endplatte (42Q), die sich in der ersten Richtung neben einem Endabschnitt der Mehrzahl an Batteriezellen (11) befindet, wobei
der Kanal (71) ferner aufweist:
einen Kanalverlaufsabschnitt (74), der in einer Richtung entlang der ersten Richtung von dem anderen Endabschnitt des Kanalhauptkörperabschnitts (72) in der ersten Richtung verläuft, und
einen Klemmabschnitt (78), der von dem Kanalverlaufsabschnitt (74) aus in der anderen Richtung entlang der ersten Richtung verläuft, wobei der Klemmabschnitt (78) und der Kanalverlaufsabschnitt (74) die Endplatte (42Q) in der zweiten Richtung zwischen sich klemmen.

## Revendications

1. Module de batterie comprenant :
une pluralité de cellules de batterie (11) empilés dans une première direction ;
un corps de couverture (51) destiné à couvrir la pluralité de cellules de batterie (11) dans une deuxième direction orthogonale à la première direction ; et
un conduit (71) à travers lequel s'écoule le gaz déchargé de chacun des cellules de batterie (11), dans lequel
le conduit (71) comporte
une partie du corps principal du conduit (72) disposée entre chaque de la pluralité de cellules de batterie (11) et le corps de couverture (51) dans la deuxième direction et s'étendant dans la première direction pour former un espace d'écoulement (110) pour le gaz,
une partie cylindrique (73) à laquelle un tuyau peut être fixé, la partie cylindrique (73) s'étendant, dans la première direction sous la forme d'un cylindre, à partir d'une partie d'extrémité de la partie du corps principal du conduit (72) dans la première direction de manière à avoir une pointe avec une ouverture,
**caractérisé par le fait que**
une saillie (271) avec laquelle une extrémité du tuyau fixée à la partie cylindrique (73) peut être mise en contact, la saillie (271) faisant saillie à partir d'une surface périphérique extérieure (73a) de la partie cylindrique (73) à une position éloignée de l'ouverture de la partie cylindrique (73) dans la première direction, et
le corps de couverture (51) comporte une partie d'ancrage (241) ancrée à la saillie (271) dans la deuxième direction.

2. Le module de batterie selon la revendication 1, dans lequel
le corps du couverture (51) comporte en outre une partie de plaque plate (231) disposée parallèlement à un plan orthogonal à la deuxième direction, et
la partie d'ancrage (241) comporte
une partie de bras (242) s'étendant dans la deuxième direction à partir d'une partie de bord périphérique de la partie de plaque plate (231) et élastiquement déformable dans une direction éloignée de la surface périphérique extérieure (73a) de la partie cylindrique (73), et
une partie de griffe (243) faisant saillie à partir d'une extrémité de la partie bras (242) en direction de la surface périphérique extérieure (73a) de la partie cylindrique (73).

3. Le module de batterie selon la revendication 1 ou 2, comprenant en outre une plaque d'extrémité (42Q) disposée à côté d'une partie d'extrémité de la pluralité de cellules de batterie (11) dans la première direction, dans lequel
le conduit (71) comporte en outre
une partie d'extension du conduit (74) s'étendant, dans une direction le long de la première direction, à partir de l'autre partie d'extrémité de la partie du corps principal du conduit (72) dans la première direction, et
une partie de clip (78) s'étendant à partir de la partie extension du conduit (74) dans l'autre direction le long de la première direction, la partie de clip (78) et la partie extension du conduit (74) prenant en sandwich la plaque d'extrémité (42Q) dans la deuxième direction.
